# EUROPÄISCHE PATENTSCHRIFT

(11) **EP 0 593 953 B1**
(45) Veröffentlichungstag und Bekanntmachung des Hinweises auf die Patenterteilung: **03.01.1996**
(21) Anmeldenummer: 93115696.2
(22) Anmeldetag: 29.09.1993
(51) Int. Cl.: F23J 7/00, F23M 5/00

(54) **Vorrichtung zur Verbrennung von gasförmigen und/oder flüssigen Brennstoffen**
Device for combustion of gaseous and/or liquid fuels
Dispositif pour la combustion de combustibles gazeux et/ou liquides

(30) Priorität: 23.10.1992 DE 4235898
(43) Veröffentlichungstag der Anmeldung: 27.04.1994
(73) Patentinhaber: Saacke GmbH & Co. KG, D-28237 Bremen (DE)
(72) Erfinder: Haubold, Klaus, D-28779 Bremen (DE)
(74) Vertreter: Goddar, Heinz J., Dr.

(56) Entgegenhaltungen:
- DE-A- 3 502 788

## Beschreibung

Die Erfindung betrifft eine Vorrichtung zur Verbrennung von gasförmigen und/oder flüssigen Brennstoffen, mit einem Flammrohr und einer in das Flammrohr oder einen diesem nachgeschalteten Raum hineinragenden Düse oder Düsenlanze zur Einspritzung eines flüssigen oder in Flüssigkeit gelösten Zusatzstoffes der gegenüber der Wandung des Flammrohres oder des diesem nachgeschalteten Raums korrodierend wirkt.

Die sich bei Verbrennungsvorgängen bildenden Stickoxide lassen sich mit Hilfe eines geeigneten Reduktionsmittels, wie Harnstoff, zu Stickstoff, Sauerstoff und Wasserdampf reduzieren. Bei dieser bereits aus der DE-3 502 788 bekannten selektiven nichtkatalytischen Reduktion von NO_{X} im Abgas kann es jedoch aufgrund nicht auszuschließender Fehleindüsungen von Harnstoff zu lokalen Konzentrationen desselben an der Wandung des Flammrohrs kommen. Hierbei kann Lochfraß durch die korrosive Einwirkung von Harnstoff und dessen Zersetzungsprodukten entstehen. Derartiger Lochfraß könnte eine Verbindung zwischen Kesselwasser und Flammrohrinnerem hervorrufen, was zu explosionsartiger Verdampfung des Wassers, Freisetzung eines erheblichen Druckes und daher schweren Unfällen führen kann. Die Entstehung derartiger Löcher läßt sich nicht durch regelmäßige Inspektionen oder Durchführung von Untersuchungen, wie zum Beispiel Ultraschallmessungen, rechtzeitig, das heißt jegliche Gefahr ausschließend, feststellen. Darüberhinaus ist ein ankorrodiertes Flammrohr praktisch irreparabel und muß insgesamt ausgetauscht werden, was zu erhöhten Kosten führt.

Der Erfindung liegt die Aufgabe zu Grunde, eine gattungsgemäße Vorrichtung zu schaffen, bei der gewährleistet ist, daß auch bei Fehleindüsungen von den genannten flüssigen oder in Flüssigkeiten gelösten Stoffen diese gegenüber der Wand des Flammrohres nicht ihre korrodierende Wirkung entfalten konnen, um eine Anfressung der Wandung des Flammrohrs und die damit verbundene Gefahr auszuschließen.

Zur Lösung dieser Aufgabe ist die erfindungsgemäße Vorrichtung dadurch gekennzeichnet daß zumindest in dem Bereich der Wandung des Flammrohres oder des diesem nachgeschalteten Raums, auf den die eingespritzte Flüssigkeit direkt einwirken könnte, eine Abdeckung aus mindestens einem, nur in Teilbereichen auf der Flammrohrwandung aufliegenden Reaktionsblech vorgesehen ist.

Dabei ist erfindungsgemäß vorgesehen, daß die Abdeckung aus mehreren, sich zumindest geringfügig überlappenden Reaktionsblechen besteht.

Die Erfindung schlägt ferner vor, daß die Reaktionsbleche so auf einem Teil des Kreisumfanges der Wandung des Flammrohres oder des diesem nachgeschalteten Raumes angeordnet sind, daß sie jeweils an ihrem einen Ende an die Wandung anstoßen und am jeweils anderen auf dem jeweils benachbarten Reaktionsblech aufliegen.

Weiterhin ist erfindungsgemäß vorgesehen, daß das (die) Reaktionsblech(e) an der Wandung und ggf. aneinander mit Hilfe von Befestigungsmitteln fixiert ist (sind).

Außerdem schlägt die Erfindung vor, daß das (die) Reaktionsblech(e) in einem Winkelbereich von 100 bis 180°, vorzugsweise 140 bis 160°, an dem relevanten Wandungsteil angebracht ist (sind).

Erfindungsgemäß wird außerdem vorgeschlagen, daß sich die Abdeckung über etwa ein Viertel der Flammrohrlänge erstreckt.

Die Erfindung schlägt auch vor, daß die Austrittsöffnung der Düsenlanze sowie die entsprechende Abdeckung im vom Brenner entfernten hinteren Bereich des Flammrohrs angeordnet sind.

Weiterhin bevorzugt ist, daß die Reaktionsbleche aus einem im wesentlichen gegen Korrosion des eingespritzten Zusatzstoffes beständigen Material bestehen.

Erfindungsgemäß wird ferner vorgeschlagen, daß die Reaktionsbleche aus korrosionsbeständigem Edelstahl bestehen.

Eine bevorzugte Ausführungsform der Erfindung ist dadurch gekennzeichnet, daß um die Austrittsöffnung der Düse bzw. der Düsenlanze herum eine tüllenartige Ablenkeinrichtung vorgesehen ist, die das Zurücklaufen von Tropfen an der Düse bzw. Düsenlanze verhindert und statt dessen die Tropfen in Richtung der Abdeckung der Wandung lenkt.

Weitere Merkmale und Vorteile der Erfindung ergeben sich aus der nachstehenden Beschreibung, in der ein Ausführungsbeispiel anhand der schematischen Zeichnungen im einzelnen erläutert wird. Dabei zeigt:
- Fig.1: einen Längsschnitt durch den NO_{X}-Abgasreduktionsabschnitt eines Flammrohres gemäß einer bevorzugten Ausführungsform der Erfindung; und
- Fig.2: einen Querschnitt entlang der I-I-Linie in Figur 1.

Eine zum Beispiel in einer Leichtöl-Schweröl-Gas-Feuerungsanlage enstehende Flamme durchläuft vor der Beendigung des Verbrennungsvorgangs einen NO_{X}-Abgasreduktionsabschnitt 10, der eine Harnstoffeinspritzdüse 20 mit einer Ablenkeinrichtung 30, eine Wandung 40, die teilweise mit plattenartigen Reaktionsbleche 50 abgedeckt ist, sowie Befestigungsmittel 60 zur Anbringung der Reaktionsbleche 50 an der Wandung 40 umfaßt.

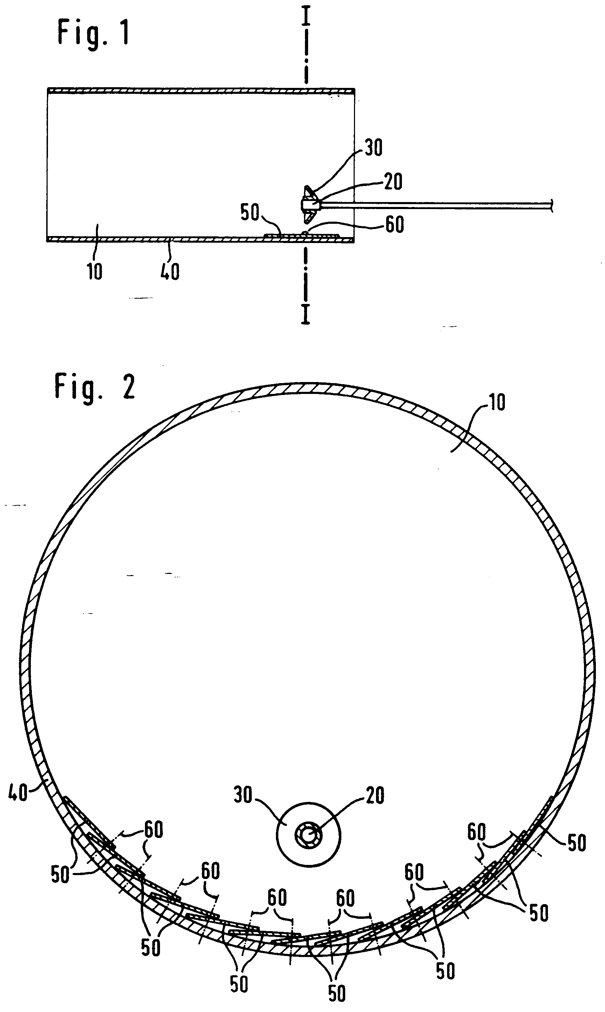

Der vorstehend beschriebene Anlagenabschnitt, der in den Figuren 1 und 2 dargestellt ist, arbeitet wie folgt:

Eine Flamme passiert zur Reduktion der Schadstoffemission der Feueranlage vor Beendigung des Verbrennungsvorganges einen NO_{X}-Abgasreduktionsabschnitt 20, wo mit Hilfe des durch die Harnstoffeinspritzdüse 10 eingeführten Reduktionsmittels, Harnstoff, Stickoxide weitgehend zu Stickstoff, Sauerstoff und Wasserstoff umgewandelt werden. Die somit schadstoffbefreite Flamme kann über einen Schornstein in die Atmosphäre geführt werden.

Die Harnstoffeinspritzdüse 20, die sich in-der unteren Hälfte der Flammrohrs befindet, ist tüllenartig mit einer Ablenkeinrichtung 30 am Auslaß umgeben, so daß die an der Düse 20 entstehenden Harnstofftropfen nicht durch Anfraß die Düse 20 selbst beschädigen, sondern abgefangen werden und zu den unter der Düse 20 angeodneten Reaktionsblechen gelenkt werden.

Der bei Fehleindüsung des Harnstoffes auf die unter der Düse 20 befindliche Wandung 40 zukommende Teil der Harnstofflösung gelangt auf die die Wandung 40 teilweise abdeckenden Reaktionsbleche 50, die eine Temperatur von etwa 650 bis 850°C besitzen. Die somit um mindestens 500°C gegenüber der Wandung 40 wärmeren Reaktionsbleche 50 sorgen für ein Verdampfen und/oder Spalten auftreffender Harnstofflösung, so daß keine Anfressung der Wandung 40 stattfinden kann.

Darüber hinaus wird durch das System der Reaktionsbleche 50 aufgrund einer Temperaturvergleichmäßigung im Flammrohr auch eine bessere Verfahrenssteuerung erreicht.

Die Erfindung ist natürlich auch wirksam, wenn anstelle von Harnstoff ein anderer korrosiver Zusatzstoff eingespritzt würde.

Die Einspritzung des Zusatzstoffes ist nicht auf ein Einspritzen beschränkt, das parallel zur Flammenbewegungsrichtung durchgeführt wird, sondern kann beispielsweise auch senkrecht dazu stattfinden. In diesem Fall muß die der Düse 20 gegenüberliegende und ggf. auch die darunterliegende Wandung 40 mit Reaktionsblechen 50 abgedeckt werden.

### Bezugszeichenliste

10. Flammrohr
20. Harnstoffeinspritzdüse
30. Ablenkeinrichtung
40. Wandung
50. Reaktionsblech
60. Befestigungsmittel

## Patentansprüche

1. Vorrichtung zur Verbrennung von gasförmigen und/oder flüssigen Brennstoffen, mit einem Flammrohr (10) und einer in das Flammrohr (10) oder einen diesem nachgeschalteten Raum hineinragenden Düse (20) oder Düsenlanze zur Einspritzung eines flüssigen oder in Flüssigkeit gelösten Zusatzstoffes, der gegenüber der Wandung des Flammrohres oder des diesem nachgeschalteten Raums korrodierend wirkt, dadurch gekennzeichnet, daß zumindest in dem Bereich der Wandung (40) des Flammrohres (10) oder des diesem nachgeschalteten Raums, auf den die eingespritzte Flüssigkeit direkt einwirken könnte, eine Abdeckung aus mindestens einem, nur in Teilbereichen auf der Flammrohrwandung aufliegendem Reaktionsblech (50) vorgesehen ist.

2. Vorrichtung nach Anspruch 1, dadurch gekennzeichnet, daß die Abdeckung aus mehreren, sich zumindest geringfügig überlappenden Reaktionsblechen (50) besteht.

3. Vorrichtung nach Anspruch 2, dadurch gekennzeichnet, daß die Reaktionsbleche (50) so auf einem Teil des Kreisumfanges der Wandung (40) des Flammrohres (10) oder des diesem nachgeschalteten Raumes angeordnet sind, daß sie jeweils an ihrem einen Ende an die Wandung anstoßen und am jeweils anderen auf dem jeweils benachbarten Reaktionsblech (50) aufliegen.

4. Vorrichtung nach einem der vorangehenden Ansprüche, dadurch gekennzeichnet, daß das (die) Reaktionsblech(e) (50) an der Wandung (40) und ggf. aneinander mit Hilfe von Befestigungsmitteln (60) fixiert ist (sind).

5. Vorrichtung nach einem der vorangehenden Ansprüche, dadurch gekennzeichnet, daß das (die) Reaktionsblech(e) (50) in einem Winkelbereich von 100 bis 180°, vorzugsweise 140 bis 160°, an dem relevanten Wandungsteil (40) angebracht ist (sind).

6. Vorrichtung nach einem der vorangehenden Ansprüche, dadurch gekennzeichnet, daß sich die Abdeckung über etwa ein Viertel der Flammrohrlänge erstreckt.

7. Vorrichtung nach einem der vorangehenden Ansprüche, dadurch gekennzeichnet, daß die Austrittsöffnung der Düsenlanze (20) sowie die entsprechende Abdeckung im vom Brenner entfernten hinteren Bereich des Flammrohrs (10) angeordnet sind.

8. Vorrichtung nach einem der vorangehenden Ansprüche, dadurch gekennzeichnet, daß die Reaktionsbleche (50) aus einem im wesentlichen gegen Korrosion des eingespritzten Zusatzstoffes beständigen Material bestehen.

9. Vorrichtung nach Anspruch 8, dadurch gekennzeichnet, daß die Reaktionsbleche (50) aus korrosionsbeständigem Edelstahl bestehen.

10. Vorrichtung nach einem der vorangehenden Ansprüche, dadurch gekennzeichnet, daß um die Austrittsöffnung der Düse bzw. der Düsenlanze (20) herum eine tüllenartige Ablenkeinrichtung (30) vorgesehen ist, die das Zurücklaufen von Tropfen an der Düse bzw. Düsenlanze (20) verhindert und statt dessen die Tropfen in Richtung der Abdeckung (50) der Wandung (40) lenkt.

## Claims

1. Apparatus for the combustion of gaseous and/or liquid fuels, comprising a flame tube (10) and a nozzle (20) or nozzle lance projecting into the flame tube (10) or into a chamber following the same, said nozzle (20) or nozzle lance being provided for injection of a liquid additive or an additive dissolved in liquid, such additive having a corrosive effect with respect to the wall of the flame tube or of the chamber following the same, characterised in that a cover consisting of at least one reaction plate (50) resting on the flame tube wall only in partial zones is provided at least in that region of the wall (40) of the flame tube (10) or of the chamber following the same on which the injected liquid can act directly.

2. Apparatus according to claim 1, characterised in that the cover consists of a plurality of at least slightly overlapping reaction plates (50).

3. Apparatus according to claim, 2, characterised in that the reaction plates (50) are so disposed on a part of the circumference of the circle of the wall (40) of the flame tube (10) or of the chamber following the same that at one end they each abut the wall and at the other end they each rest on the respective adjacent reaction plate (50).

4. Apparatus according to any one of the preceding claims, characterised in that the reaction plate or plates (50) is/are fixed on the wall (40) and, if required, on one another with the aid of fixing means (60).

5. Apparatus according to any one of the preceding claims, characterised in that the reaction plate or plates (50) is/are disposed on the relevant wall part (40) in an angle range of 100 to 180 degrees, preferably 140 to 160 degrees.

6. Apparatus according to any one of the preceding claims, characterised in that the cover extends over approximately one-quarter of the flame tube length.

7. Apparatus according to any one of the preceding claims, characterised in that the exit aperture of the nozzle lance (20) and the corresponding cover are disposed in the rear zone of the flame tube (10) remote from the burner.

8. Apparatus according to any one of the preceding claims, characterised in that the reaction plates (50) consist of a material which is substantially resistant to corrosion of the injected additive.

9. Apparatus according to claim 8, characterised in that the reaction plates (50) consist of corrosion-resistant high-grade steel.

10. Apparatus according to any one of the preceding claims, characterised in that a deflecting device (30) in the form of a spout is provided around the exit aperture of the nozzle or nozzle lance (20) and prevents droplets from running back at the nozzle or nozzle lance (20) and instead deflects the droplets in the direction of the cover (50) of the wall (40).

## Revendications

1. Dispositif destiné à la combustion de combustibles gazeux et/ou liquides, comportant un tube-foyer (10) et une buse (20) ou une lance de buse pénétrant dans le tube-foyer (10) ou dans un espace situé en aval de ce dernier pour injecter un additif liquide ou dissout dans un liquide, qui a un effet corrosif vis-à-vis de la paroi du tube-foyer ou de l'espace situé en aval de ce dernier, caractérisé en ce que, au moins dans la zone de la paroi (40) du tube-foyer (10) ou de l'espace situé en aval de ce dernier sur laquelle le liquide injecté pourrait agir directement, il est prévu un recouvrement constitué d'au moins une tôle de réaction (50) qui ne s'applique que dans des zones partielles sur la paroi du tube-foyer.

2. Dispositif selon la revendication 1, caractérisé en ce que le recouvrement est constitué de plusieurs tôles de réaction (50) se chevauchant au moins faiblement.

3. Dispositif selon la revendication 2, caractérisé en ce que les tôles de réaction (50) sont disposées sur une partie de la circonférence de la paroi (40) du tube-foyer (10) ou de l'espace situé en aval de ce dernier de telle sorte que, par l'une de leurs extrémités elles soient respectivement placées contre la paroi, et que par l'autre extrémité elles prennent appui sur la tôle de réaction voisine (50).

4. Dispositif selon l'une quelconque des revendications précédentes, caractérisé en ce que la ou les tôles de réaction (50) est ou sont fixée(s) sur la paroi (40), et le cas échéant les unes contre les autres, à l'aide de moyens de fixation (60).

5. Dispositif selon l'une quelconque des revendications précédentes, caractérisé en ce que la ou les tôles de réaction (50) est ou sont fixée(s) sur la partie de paroi (40) considérée dans une zone angulaire de 100 à 180°, de préférence de 140 à 160°.

6. Dispositif selon l'une quelconque des revendications précédentes, caractérisé en ce que le recouvrement s'étend approximativement sur un quart de la longueur du tube-foyer.

7. Dispositif selon l'une quelconque des revendications précédentes, caractérisé en ce que l'orifice de sortie de la lance de buse (20), ainsi que le recouvrement correspondant, sont disposés dans la zone arrière du tube-foyer (10) éloignée du brûleur.

8. Dispositif selon l'une quelconque des revendications précédentes, caractérisé en ce que les tôles de réaction (50) sont constituées d'un matériau qui résiste sensiblement à la corrosion de l'additif injecté.

9. Dispositif selon la revendication 8, caractérisé en ce que les tôles de réaction (50) sont constituées d'un acier spécial résistant à la corrosion.

10. Dispositif selon l'une quelconque des revendications précédentes, caractérisé en ce qu'un dispositif déflecteur (30) du type douille est prévu autour de l'orifice de sortie de la buse ou de la lance de buse (20) qui empêche le reflux de gouttes sur la buse ou la lance de buse (20) et qui, au lieu de cela, les dirige en direction du recouvrement (50) de la paroi (40).
